# EUROPEAN PATENT APPLICATION

(11) **EP 2 960 847 A1**
(43) Date of publication of application: **30.12.2015**
(21) Application number: 15157333.4
(22) Date of filing: 03.03.2015
(51) Int. Cl.: G06Q 30/02

(54) **Portable storage medium including instruction manual content for vehicle**

(30) Priority: 27.06.2014 KR 20140079828
(71) Applicant: Dong Woon International Co., Ltd., Seoul 137-868 (KR)
(72) Inventor: Kim, Dong Cheol, 137-868 Seocho-gu, Seoul (KR)
(74) Representative: Ciceri, Fabio

(57) **Abstract**

Disclosed herein is a portable storage medium including content through which a user can easily understand an instruction manual for a vehicle and search the instruction manual for desired information. The portable storage medium may include a content storage unit configured to store execution content including information about moving images of an instruction manual for the vehicle and advertisement content, a control unit configured to extract the lists of respective items from the file of the execution content including the information about the moving images of the instruction manual for the vehicle and generate playable composite content by combining selected execution content with the advertisement content, and an interface unit configured to access an external terminal and send information about the composite content to the external terminal.

## Description

### CROSS REFERENCE TO RELATED APPLICATION

The present application claims the benefit of Korean Patent Application No. KR 10-2014-0079828 filed in the Korean Intellectual Property Office on March 17, 2014, the entire contents of which are incorporated herein by reference.

### BACKGROUND OF THE INVENTION

### 1. Technical Field

The present invention relates to the technology of a portable storage medium including content through which a user can easily understand an instruction manual for a vehicle and search the instruction manual for desired information.

### 2. Description of the Related Art

Suppliers who manufacture and supply vehicles provide purchasers with instruction manuals, including the introduction, installation method, use method, description of functions, method of determining a failure, and directions for the use of the vehicles, along with the vehicles so that users may accurately use the vehicles. Most of users learn only basic functions with reference to the instruction manuals when first purchasing the vehicles, but refer to the instruction manuals if a corresponding function is required with respect to functions that are not frequently used.

All of global vehicle companies provide instruction manuals in preparation for a driver's safety accident when releasing vehicles. However, most of users rarely use the instruction manuals because there are too many technical terms in instruction manual and the contents of the instruction manual is voluminous.

Accordingly, most of users refer to the descriptions of salespersons who sold vehicles or make inquires of a call center about problems in the vehicles, thus making the users inconvenient in using the vehicles. Furthermore, users and manufacturers bear great waste of time and enormous expense loads because the users apply the AS centers of the manufacturers for telephone consulting and/or online consulting.

### SUMMARY OF THE INVENTION

Accordingly, the present invention has been made keeping in mind the above problems occurring in the prior art, and an object of the present invention is to provide a portable storage device including an instruction manual provided in a moving image form so that the purchaser of a vehicle can easily understand the instruction manual, so a user may connect the portable storage device to a display (e.g., TV or a computer) or a navigator provided inside or outside the vehicle, may easily access the instruction manual, and may learn a manipulation method of the vehicle by easily selecting and viewing a desired image part.

In accordance with an aspect of the present invention, there may be provided a portable storage medium, including a content storage unit configured to store execution content including information about moving images of an instruction manual for the vehicle and advertisement content, a control unit configured to extract the lists of respective items from the file of the execution content including the information about the moving images of the instruction manual for the vehicle and generate playable composite content by combining selected execution content with the advertisement content, and an interface unit configured to access an external terminal and send information about the composite content to the external terminal.

### BRIEF DESCRIPTION OF THE DRAWINGS

FIGS. 1 and 2 are block diagrams illustrating the elements of a portable storage medium in accordance with an embodiment of the present invention; and

FIGS. 3 to 7 are images illustrating implementation examples of advertisements using the portable storage medium in accordance with an embodiment of the present invention.

### <Description of reference numerals>

- 100:: interface unit
- 200:: control unit
- 210:: content listing unit
- 220:: selected content extraction unit
- 230:: execution file formation unit
- 240:: AS information selection unit
- 250:: AS signal transmission unit
- 260:: data management unit
- 270:: sub-advertisement matching unit
- 300:: content storage unit
- 310:: instruction manual content storage unit
- 320:: advertising content storage unit
- 330:: translation information storage unit
- 340:: AS information storage unit
- 400:: external terminal
- 500:: advertising service server

### DETAILED DESCRIPTION

Hereinafter, some exemplary embodiments of the present invention are described in detail with reference to the accompanying drawings. The same or similar elements are assigned the same reference numerals irrespective of their reference numerals, and a redundant description thereof is omitted.

Terms, such as the first and the second, may be used to describe various elements, but the elements are not restricted by the terms. The terms are used to only distinguish one element from the other element.

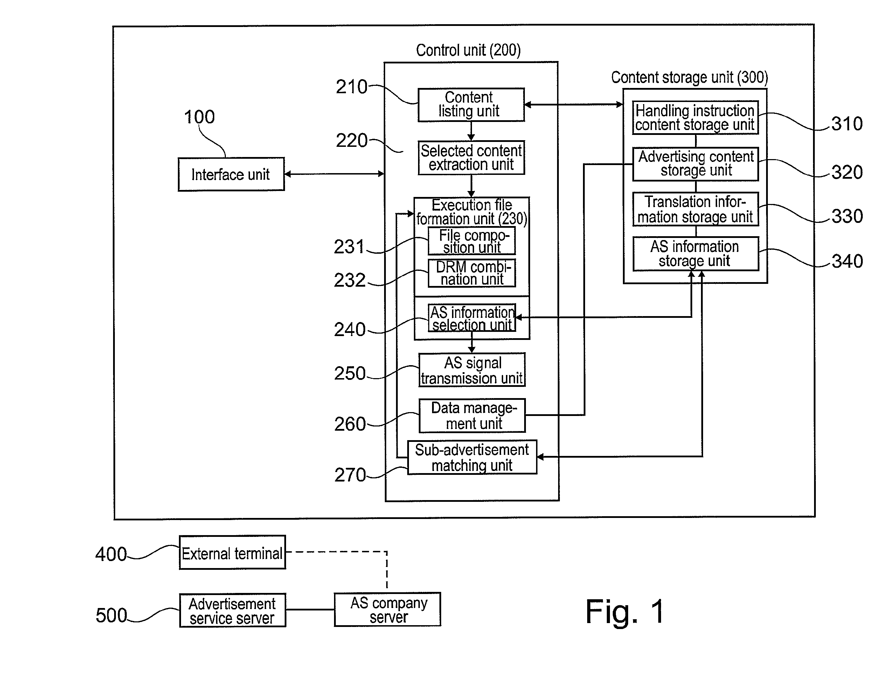

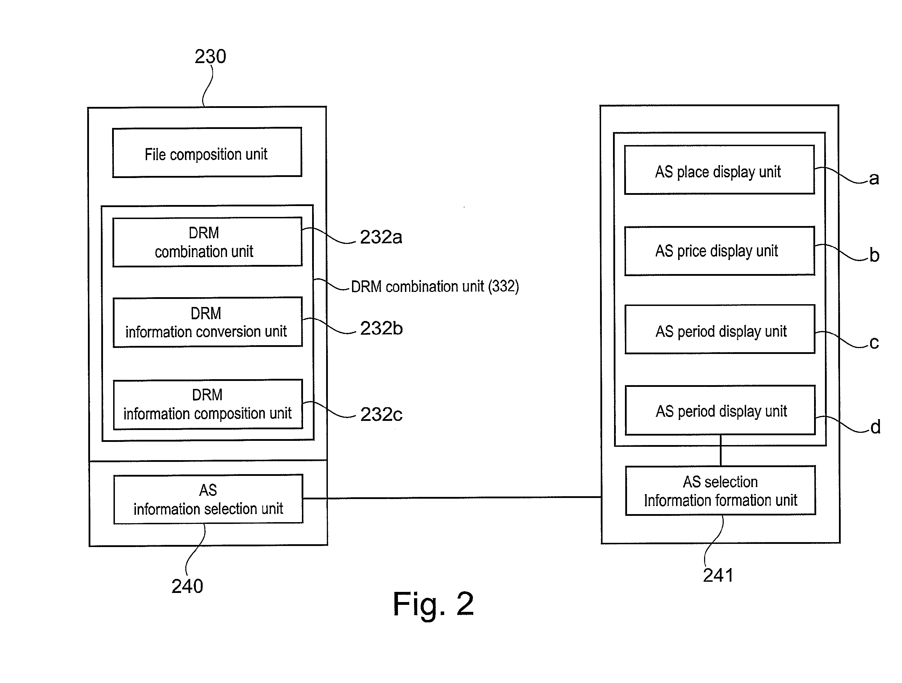

Referring to FIGS. 1 and 2, a portable storage medium including instruction manual content for a vehicle in accordance with an embodiment of the present invention may include a content storage unit 300 configured to store execution content, including information about the moving images of the instruction manual for a vehicle and advertisement content, a control unit 200 configured to extract lists of respective items from the file of the execution content including the information about the moving images of the instruction manual for the vehicle, generate composite content that may be played back by combining the selected execution content with the advertisement content, and execute the generated composite content, and an interface unit 100 configured to access an external terminal 400 and send information about the composite content to the external terminal.

That is, in accordance with an embodiment of the present invention, the portable storage device including an instruction manual provided in a moving image form so that the purchaser of a vehicle can easily understand the instruction manual is provided. Accordingly, a user may connect the portable storage device to a display (e.g., TV or a computer) or a navigator provided inside or outside the vehicle, may easily access the instruction manual, and may learn a manipulation method of the vehicle by easily selecting and viewing a desired image part. As a result, a failure rate attributable to the poor manipulation of a vehicle can be significantly reduced, and various advertisements can be implemented by combining an advertising effect with execution content included in an instruction manual.

The portable storage medium in accordance with an embodiment of the present invention commonly refers to a device including a variety of types of portable memory devices. The portable storage medium may mean a detachable storage medium, such as an external type Solid State Drive (SSD) or Universal Serial Bus (USB) that is combined with an external device and configured to execute internal content, in addition to various commercial disk (e.g., a Compact Disk (CD) structures. An example in which the present invention is applied to a USB is described below. In particular, the portable storage medium of the present invention may include the interface unit 100 for connection with the external terminal 400 because it is combined with the external terminal and configured to execute execution files.

The control unit 200 may include a content listing unit 210 configured to form the lists of the respective items of the file of the execution content including the information about the moving images of the instruction manual for the vehicle, a selected content extraction unit 220 configured to extract selected execution content from the file of the execution content provided in a list form, a file formation unit 230 configured to generate executable composite content by inserting advertisement content into the execution content selected by the selected content extraction unit 220, an After Service (AS) information selection unit 240 configured to list and combine pieces of AS information related to instruction manual items corresponding to the selected execution content, and a data management unit 260 configured to sort the contents of an advertisement matched with the contents of the execution content and to determine locations where the advertisement content is inserted into the execution content or locations where translation content is combined with the execution content and order of the advertisement content executed.

The content listing unit 210 lists moving image files, such as items (e.g., constructions and device manipulations) included in the instruction manual for the vehicle stored in the instruction manual content storage unit 310 of the content storage unit 300. Accordingly, a user may select one or a plurality of methods of manipulating or handling a desired item from a plurality of the execution content.

If a user selects the execution content of a desired instruction manual, the selected content extraction unit 220 extracts the selected execution content. The execution file formation unit 230 combines the extracted execution content with advertisement content in the form of an execution file to be displayed. That is, the execution file formation unit 230 functions to generate content combined with an advertisement (hereinafter called "composite content") by combining a plurality of pieces of selected execution content with advertisement content provided by an advertising content storage unit 320. In such a case, the advertisement content may be combined with the plurality of pieces of selected execution content so that the advertisement content is executed prior to the execution of the execution content or it is inserted into the middle or end of the execution content and executed.

Furthermore, a file composition unit 231 composes the advertisement content and the extracted execution content by inserting the advertisement content into the extracted execution content. In this case, Digital Rights Management

(DRM) may be combined with the execution content. More specifically, in an embodiment of the present invention, the execution file generation unit 230 may include the file composition unit 231 configured to compose the advertisement content and the extracted execution content by inserting the advertisement content into the execution content and a DRM combination unit 232 configured to combine DRM with the execution content. That is, a DRM mark may be inserted and combined with content, such as a moving image or still image including the contents of an instruction manual for a vehicle, in order to prevent an illegal copy or in order for the content to be played back using only a dedicated content player.

To this end, as illustrated in FIG. 2, the DRM combination unit 232 in accordance with an embodiment of the present invention may include a DRM information generation unit 232a configured to generate DRM information to be combined with the extracted execution content, a DRM information conversion unit 232b configured to convert the DRM information into the same format as the execution content, and a DRM information composition unit 232c configured to compose the execution content and the DRM information.

The DRM information generation unit 232a may generate information about a content use method, a limit condition in using the execution content, an encryption method, an encryption key, the length of the encryption key with respect to the execution content.

The DRM information conversion unit 232b converts the DRM information, generated by the DRM information generation unit 212a, into DRM content having the same format as the execution content. The format of the execution content may be any one of a still image, a moving image, and sound. The DRM information to be combined with the execution content may be converted into a corresponding format.

The DRM information composition unit 232c generates the DRM content by composing the DRM information, converted into the same format as the execution content, and digital content using a watermarking scheme.

In accordance with an embodiment of the present invention, the composition of the execution content and the DRM information may be performed as follows. For example, if execution content in accordance with an embodiment of the present invention is sound content, the DRM information conversion unit 232b composes DRM content of a sound format and the execution content using a sound watermarking scheme. The DRM content of a sound format is generated in the form of sound that is rarely audible to the human ear, and thus a person does not feel a change of the sound although the execution content and the DRM content are composed. The sound is extracted by an execution content-dedicated playback device in accordance with an embodiment of the present invention using a voice recognition method.

If the execution content is still image content, the DRM information conversion unit 232b composes DRM content of a still image format and the execution content using an image watermarking scheme. The DRM content of a still image format is also generated in the form of an image that is rarely visible to the human eye, and thus a person rarely feels a change of the image although the execution content and the DRM content are composed. As in the content of a sound format, the image is extracted by an execution content-dedicated playback device using an image recognition method. Furthermore, if the execution content is moving image content, the moving image content is converted into content of a still image format as described above. Accordingly, the converted content of a still image format and each frame of the moving image are composed in an image watermarking form.

As described above, in execution content in accordance with an embodiment of the present invention, DRM information is converted into the same format as digital content, and the DRM information and the digital content are composed using a watermarking scheme. Thus, if a malicious user tries to delete the DRM information or overwrite the DRM information, the original content itself that has been composed is damaged or the overwritten DRM information is not recognized by an execution content-dedicated playback device in accordance with an embodiment of the present invention. Accordingly, the deletion and manipulation of composed DRM information are impossible.

As illustrated in FIG. 1, the control unit 200 may be configured to further include the AS information selection unit 240 configured to list and combine the pieces of AS information related to the instruction manual items corresponding to the selected execution content and a data management unit 260 configured to sort the contents of an advertisement matched with the contents of the execution content and to determine locations where the advertisement content is inserted into the execution content or locations where translation content is combined with the execution content and order of the advertisement content executed.

The AS information selection unit 240 displays information about the AS place, AS price, AS period, and AS expenses of a corresponding item provided by the AS information storage unit 340 of the content storage unit 300 and forms AS request information by combining pieces of selected information. Furthermore, in such a case, the control unit 200 may be configured to further include an AS signal transmission unit 250 configured to send an AS request signal, corresponding to AS selection information selected by the AS information selection unit 240, from an external terminal 400 to an AS company server through the interface unit 100.

Furthermore, referring to FIG. 1, the content storage unit 300 may stores pieces of main execution content, such as moving images and still images for each item related to various elements and handling methods of a vehicle, stored in the portable storage medium and stores a variety of types of advertisement information combined with the execution content and sub-advertisements associated with related products displayed in the execution content.

Furthermore, the content storage unit 300 may store foreign language translation information matched with the voice and/or text information of the execution content. To this end, the content storage unit 300 may include the instruction manual execution content storage unit 310 configured to store the execution content of at least one of instruction moving images and instruction still images, the advertising content storage unit 320 configured to store pieces of advertisement content inserted into the files of the execution content, and a translation information storage unit 330 configured to store pieces of translation content matched with the files of the execution content. Although not illustrated, the portable storage medium in accordance with an embodiment of the present invention may be formed of NAND or NOR memory having a specific memory capacity, and it may include flash memory for storing specific information. The content storage unit 300 may be implemented using some allocated space of such flash memory or may be implemented using a separate memory structure. Furthermore, the content storage unit 300 may further include the AS information storage unit 340 configured to store AS-related information related to a corresponding item of an instruction moving image.

Execution content stored in the instruction manual content storage unit 310 may include pieces of content that are randomly selected and are optimal for various customer bases who purchase vehicles, such as moving images of elements required for various manipulations of vehicles, moving images related to common maintenance and service for vehicles, and/or self-diagnosis methods for determining a failure. The execution content may be provided to specific customers in a product form of a single component having portability. The reason for this is to achieve a public information effect by providing execution content and advertisement content, stored in the portable storage medium, to core or prospect customers not to an unspecified number of the general public because the execution content and advertisement content give publicity to target customers having interest that is the same as or similar to a user.

The advertising content storage unit 320 stores a variety of types of advertisement content and may chiefly store common advertisement content provided by external clients who make advertising requests and sub-advertisement content, that is, the advertisement of a target product related to the execution content. The common advertisement content means common advertisements (e.g., moving images, still images, text, and photos) implemented in such a way as to be inserted into the execution content irrespective of genres, such as vehicles, vehicle consumables, finance, education, sports, fashions, and foods.

Furthermore, the sub-advertisement content may include, for example, the advertisements of a variety of types of equipment, sunglasses, auxiliary mirrors, and ECM equipment which may help a lane change if the execution content is a moving image of a manipulation method including a lane detection function in vehicle driving mode.

The translation information storage unit 330 includes foreign language translation voice or text (or subtitles) corresponding to voice or text that is exposed when the execution content is executed. In this case, a variety of types of translation content are combined with the execution content depending on the subject of marketing languages, such as English, Japanese, Chinese, Arabic, and German. Accordingly, use convenience can be increased, and an advertising effect can be extended to global vehicle purchasers in terms of the language.

Furthermore, in relation to order that pieces of composite content are executed in accordance with an embodiment of the present invention, the data management unit 260 of the control unit 220 may function to determine and control playback order when a moving image is played back so that advertising data may be first played back over executing content or the advertising data may be played back after the execution content is played back. Furthermore, the data management unit 260 determines a location where text or an image advertisement is combined in the case of translation content or common advertisement content combined with execution content. For example, the data management unit 260 may include advertisement data in the head, middle, or tail part of a moving image content file.

The control unit 200 may further include a sub-advertisement matching unit 270 configured to compare the contents of sub-advertisement content, stored in the advertising content storage unit 320, with the contents of the execution content so that an advertisement having a high relationship with a corresponding product is combined with the execution content at a set specific time or image viewpoint.

For example, the contents of an advertisement having similar contents as execution content or having a subject scene matched with that of the execution content may pop up as a spot advertisement. For another example, execution content may be sorted for each scene based on a time unit, and a spot advertisement scene of 1 to 2 seconds may be inserted into the sorted execution content after a scene matched with the contents of an advertisement to be provided. The advertisement is provided similar to an indirect advertisement provided while a common soap opera is screened. Such a short spot advertisement may be inserted into a scene matched with an advertisement to be provided to repeatedly watched execution content or may be inserted into a desired viewpoint to be provided so that a user is not hindered from watching the execution content.

In such a case, a URL address may be included in sub-content so that a sales site or information site corresponding to a specific product can be accessed in association with an advertising service server 500 (e.g., a web server) capable of wireless and wired communication with the external terminal 400 of FIG. 1 while the execution content is played back. In such a case, the external terminal 400 has a concept that generally refers to a device including a display screen, such as a computer, a portable display device, a navigator, or a mobile device equipped with a module for accessing the interface unit 100 of the portable storage medium in accordance with an embodiment of the present invention, executing composite content, and displaying the executed composite content. Furthermore, the external terminal 400 may be configured to recognize connection when it is connected with the portable storage medium and to drive a plug&play module according to a result of the recognition. Alternatively, the external terminal 400 may be configured to check information stored in USB memory using a USB agent pop-up screen when it is connected to a common USB and to check or execute corresponding composite content through a click process.

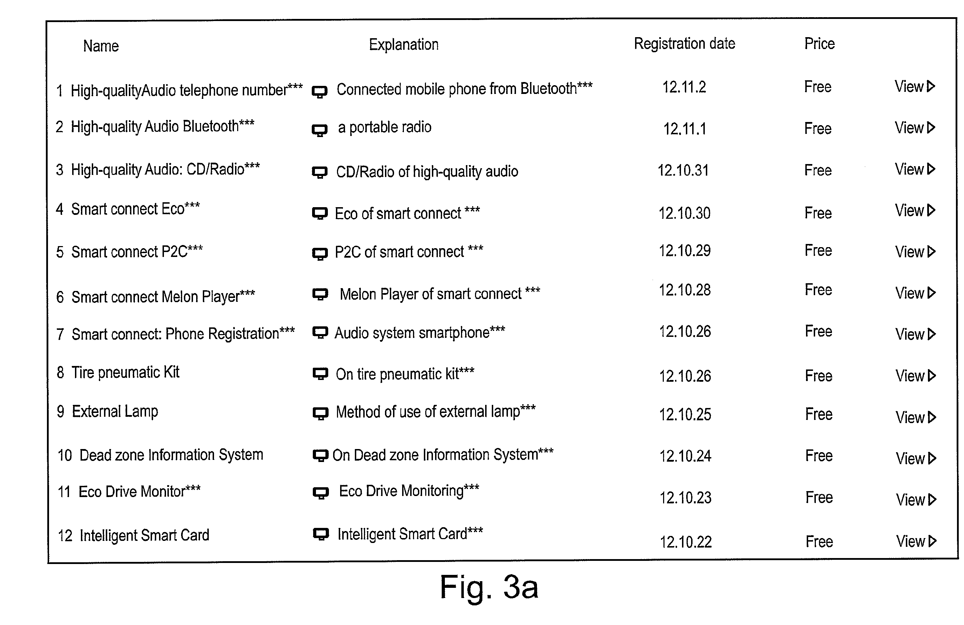

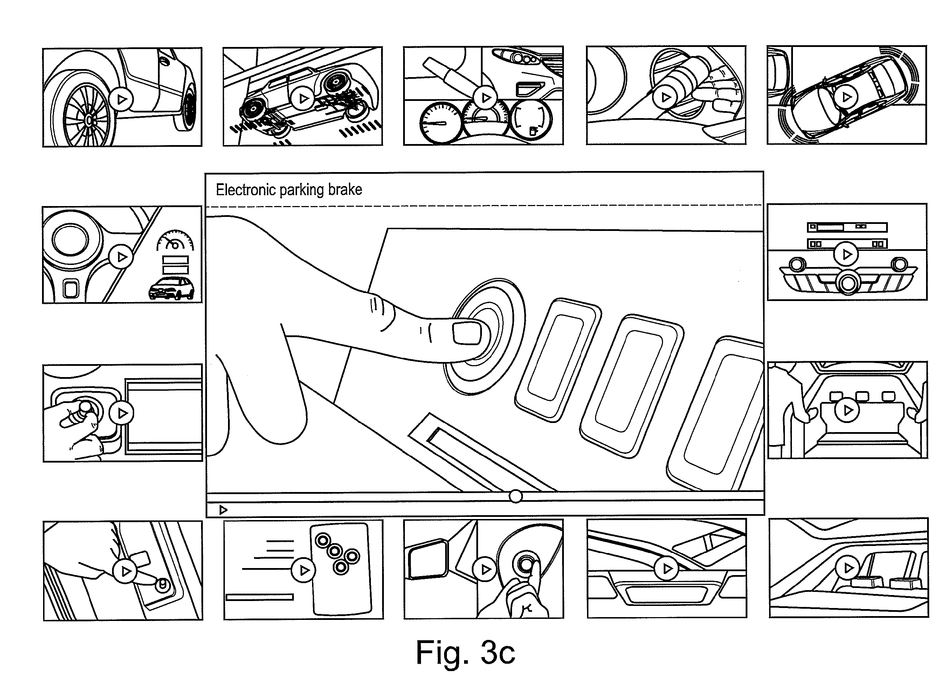

FIGS. 3A to 3C are diagrams illustrating examples of a plurality of instruction manual items that are extracted by the control unit according to content listing in accordance with an embodiment of the present invention.

As illustrated in FIG. 3A, a user may connect the portable storage medium in accordance with an embodiment of the present invention with the external terminal 400 equipped with a display device, may select a desired item of a vehicle (e.g., may select a desired item from the lists of the items of an instruction manual limited to a specific vehicle), and may check the selected item in a moving image form. Furthermore, if the AS of the corresponding item (e.g., an audio item) is required, a variety of pieces of information, such as a required price or expenses and contact information of an AS company, may be displayed in corresponding content.

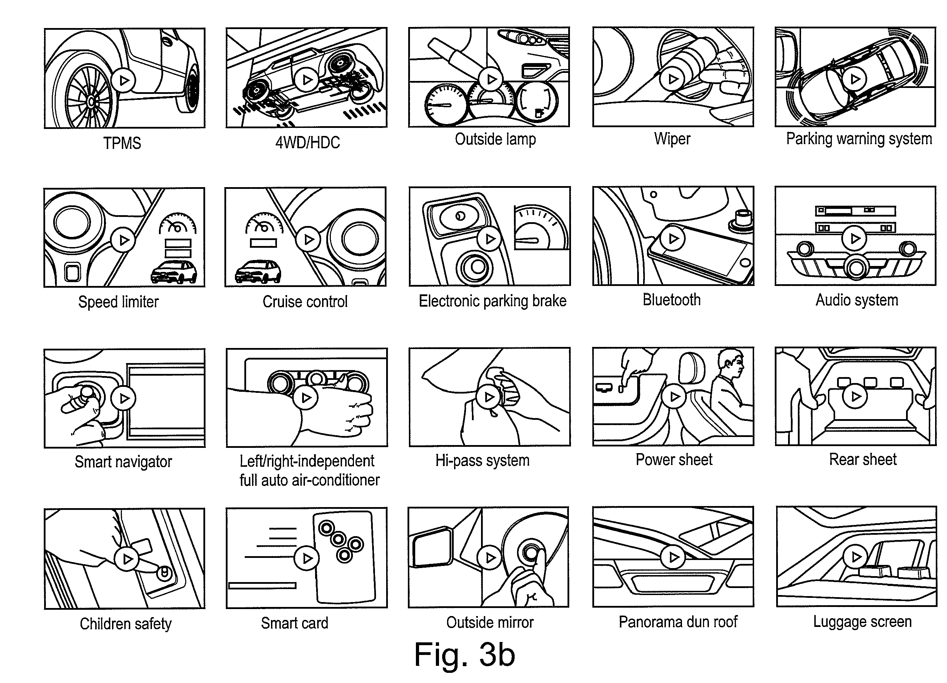

In some embodiments, a plurality of instruction manual items extracted by the control unit 200 according to content listing may be displayed in the form of images related to the instruction manual items as illustrated in FIG. 3B, or a selected image may be displayed in a pop-up form or an independent form as illustrated in FIG. 3B.

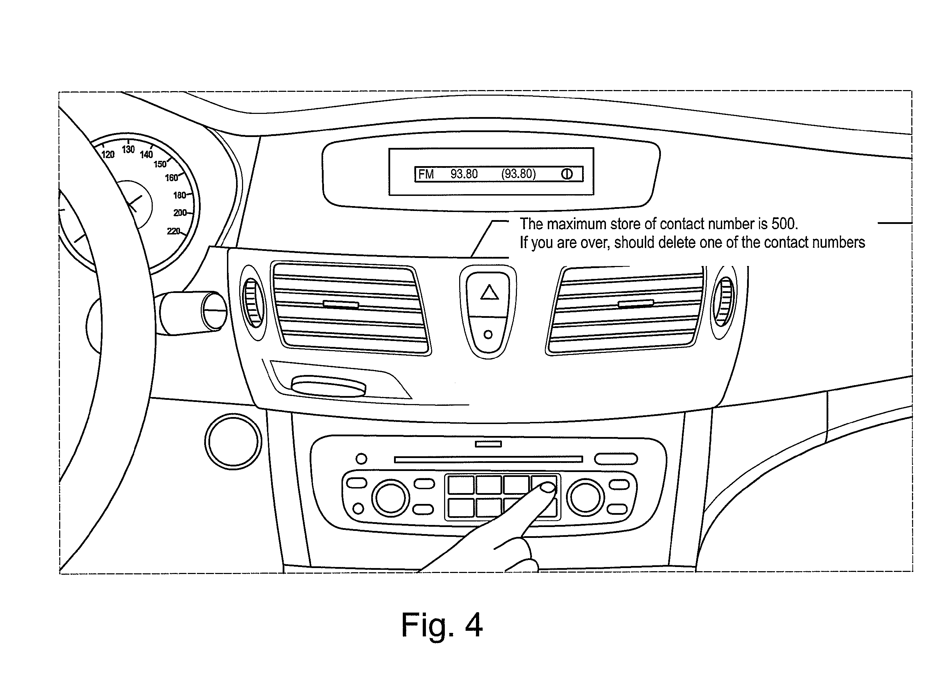

FIG. 4 is a diagram illustrating an example in which execution content selected by a user and formed by the execution file formation unit 230 of the control unit 200 has been implemented (e.g., a selected item: an audio instruction manual).

Execution content executed by the control unit 200 of in the portable storage medium in accordance with an embodiment of the present invention may be implemented in the form of composite content by being combined with advertisement information. Such composite content may be executed in a moving image form as illustrated in FIG. 4.

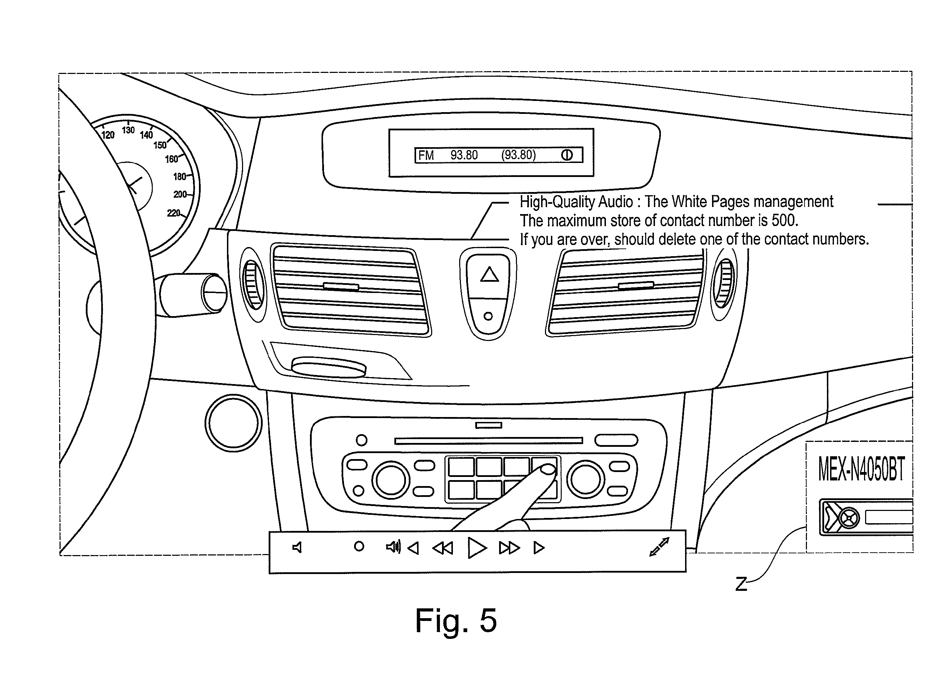

For example, in the case of an audio-related advertisement, if sub-content is combined with the moving image (i.e., execution content) of the instruction manual of FIG. 4 in addition to a main advertisement independently executed for several seconds, the sub-advertisements X of other products of a vehicle audio device having a Bluetooth function embedded therein may be combined with the execution content in a box format and provided as illustrated in FIG. 5. The combination of such an advertisement may have order and an arrangement structure performed by the file composition unit 231.

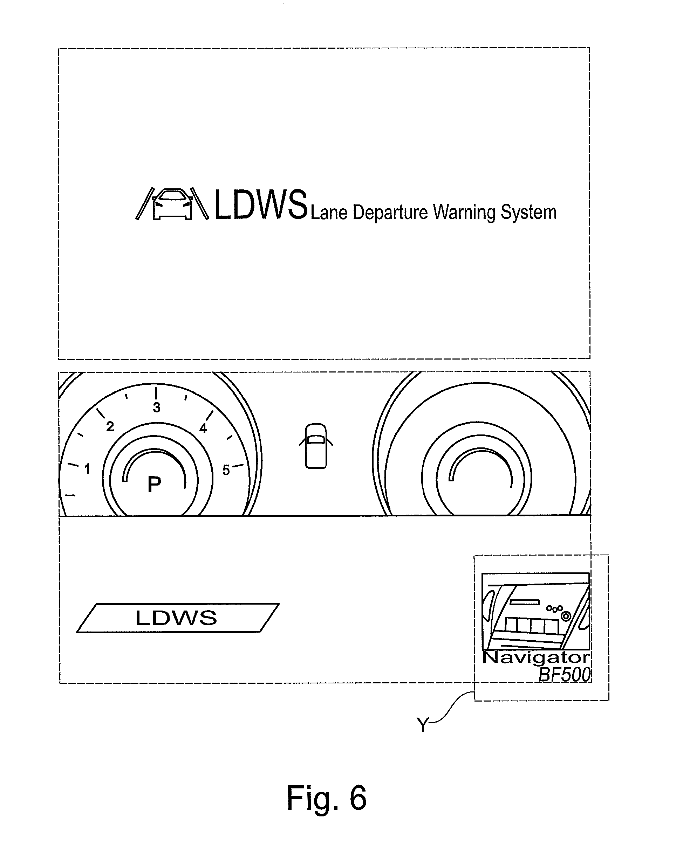

Such a sub-advertisement may operate in conjunction with a product related to a moving image (i.e., execution content) of an instruction manual as described above. Execution content regarding the manipulation description of a lane departure warning function, such as that of FIG. 6, may be implemented so that it is combined with a navigator advertisement Y having a lane departure warning function.

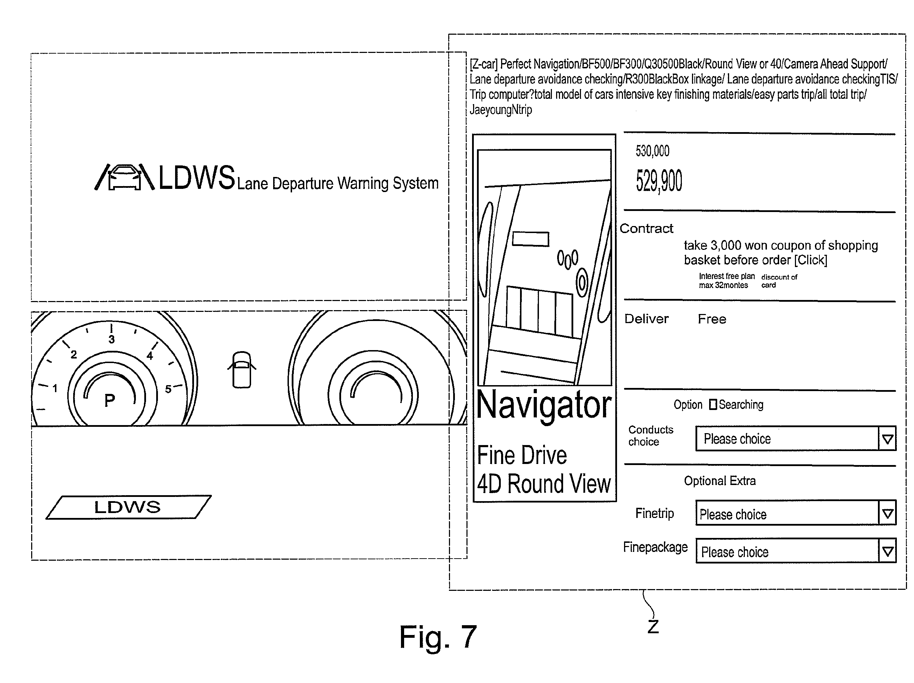

If the URL of a corresponding sub-advertisement or linked product information in such an advertisement image is clicked on through a computer or a display device, that is, if the item Y of FIG. 6 is clicked on, the contents of a separate sub-advertisement including detailed information may be exposed in the form of a split screen Z or an overlap screen as illustrated in FIG. 7. In such a case, if information, such as an URL address, is included in the contents of the sub-advertisement, a corresponding advertisement server or web page may be directly connected.

In accordance with an embodiment of the present invention, the moving image content of an instruction manual for a vehicle is included in a USB device that may be easily carried and is provided in a form in which the content can be selected very conveniently so that the import of a vehicle manipulation can be learnt. Accordingly, there is an advantage in that the number of AS inquiries and a maintenance and repair ratio can be significantly reduced. Furthermore, there is an advantage in that a public information effect can be maximized because an advertisement is inserted at an early stage of a moving image or between moving images or a sub-advertisement is inserted in the middle of a moving image and is provided to target or prospect customers.

In accordance with an embodiment of the present invention, an instruction manual for a vehicle is included in a USB device and provided in a moving image form so that it may be repeatedly watched. Accordingly, there are advantages in that a failure rate attributable to an indiscrete manipulation of a vehicle that suddenly becomes IT digitalization can be significantly reduced and an accident rate can also be significantly reduced because the poor driving accidents of drivers who are not accustomed to functions are prevented.

Furthermore, methods of using various elements of a vehicle or a variety of types of moving image or still image content of a vehicle instruction manual are included in the portable storage medium that can be easily carried, only a desired one of content parts that are automatically listed in a plurality of instruction manual items is selected and combined with a variety of pieces of advertisement content, and a specific product and a company image advertisement are provided to target customers through repetitive playback and watching. Accordingly, there is an advantage in that an advertising effect can be maximized.

In particular, AS information is also displayed in a part associated with a moving image of an instruction manual so that it can be selected. Accordingly, there is an advantage in that efficient AS can be provided.

Furthermore, there is an advantage in that an advertising effect can be maximized because advertisement content combined with execution content is matched with a product, displayed on a screen, according to the subject of the execution content or similarity with the execution content and is presented in the form of a spot advertisement.

Furthermore, a portable storage medium having a form of a single portable component can be provided to specific customers. Accordingly, there is an advantage in that a public information effect can be maximized because execution content and advertisement content stored in the portable storage medium are provided to core or prospect customers not to an unspecified number of the general public and they give publicity to target customers having interest that is the same as or similar to a user.

The term "unit" used in the portable storage medium in accordance with an embodiment of the present invention may mean, but is not limited to, a software or hardware component, such as a Field Programmable Gate Array (FPGA) or an Application-Specific Integrated Circuit (ASIC), which performs specific tasks. The "unit" may advantageously be configured to reside on an addressable storage medium and configured to operate on one or more processors. Accordingly, the "unit" may include, for example, components, such as software components, object-oriented software components, class components, and task components, processes, functions, attributes, procedures, sub-routines, segments of program code, drivers, firmware, microcode, circuitry, data, databases, data structures, tables, arrays, and variables. The functionalities provided in the components and units may be combined into fewer components and "units" or may be further separated into additional components and "units". Furthermore, the components and "units" may be implemented to operation on one or more CPUs within a device or a security multimedia card.

Although some exemplary embodiments of the present invention have been described above, the present invention is not limited to the above embodiments. It will be evident to those skilled in the art that the present invention can be modified in various ways from the above description. Accordingly, the scope of the present invention should not be limited to the aforementioned embodiments, but should be defined within the scope of the appended claims and equivalent thereof.

## Claims

1. A portable storage medium comprising instruction manual content for a vehicle, comprising:
a content storage unit 300 configured to store execution content comprising information about moving images of an instruction manual for the vehicle and advertisement content;
a control unit 200 configured to extract lists of respective items from a file of the execution content comprising the information about the moving images of the instruction manual for the vehicle and generate playable composite content by combining selected execution content with the advertisement content; and
an interface unit 100 configured to access an external terminal and send information about the composite content to the external terminal.

2. The portable storage medium of claim 1, wherein the control unit 200 comprises:
a content listing unit 210 configured to form the lists of the respective items of the file of the execution content comprising the information about the moving images of the instruction manual for the vehicle;
a selected content extraction unit 220 configured to extract the selected execution content from the file of the execution content provided in a list form;
a file generation unit 230 configured to generate the playable composite content by inserting the advertisement content into the execution content selected by the selected content extraction unit;
an AS information selection unit 240 configured to list and combine pieces of AS information related to instruction manual items corresponding to the selected execution content; and
a data management unit 260 configured to sort contents of an advertisement matched with contents of the execution content, determine a location where the advertisement content or translation content is combined within the execution content and order that the advertisement content is executed, and assign the determine location and order.

3. The portable storage medium of claim 2, wherein the content storage unit 300 comprises:
an instruction manual content storage unit 310 configured to store the execution content of at least one of an instruction moving image and an instruction still image according to each of the items regarding a use of the vehicle;
an advertising content storage unit 320 configured to store the advertisement content inserted into the file of the execution content;
a translation information storage unit 330 configured to store the translation content matched with the file of the execution content; and
an AS information storage unit 340 configured to store AS-related information related to a corresponding item of the instruction moving image.

4. The portable storage medium of claim 2, wherein the control unit 200 further comprises an AS signal transmission unit 250 configured to send an AS request signal, corresponding to the AS selection information selected by the AS information selection unit 240, from the external terminal to an AS company server through the interface unit.

5. The portable storage medium of claim 4, wherein the control unit 200 further comprises a sub-advertisement matching unit 270 configured to sort the contents of the advertisement matched with the contents of the execution content and provide a sub-advertisement matched with the sorted contents of the advertisement.

6. The portable storage medium of claim 5, wherein the sub-advertisement matching unit 270 sorts the composite content according to each scene based on a time unit and inserts a spot advertisement scene into a scene matched with the contents of the advertisement.

7. The portable storage medium of any one of claims 2 to 6, wherein the execution file formation unit 230 comprises:
a file composition unit 231 configured to insert the advertisement content into the execution content; and
a Digital Rights Management (DRM) combination unit 232 configured to combine DRM with the execution content.

8. The portable storage medium of claim 7, wherein the DRM combination unit 232 comprises:
a DRM information generation unit 212 configured to generate information about the DRM to be combined with the execution content;
a DRM information conversion unit 213 configured to convert the DRM information into a format identical with a format of the execution content; and
a DRM information composition unit 213 configured to compose the execution content and the DRM information.

9. The portable storage medium of claim 7, wherein the AS information selection unit 240 displays information about an AS place, AS price, AS period, and AS expenses of a corresponding item provided by the AS information storage unit 340 and generates AS request information by combining pieces of selected information.

10. The portable storage medium of claim 9, wherein the portable storage medium comprises a Universal Serial Bus (USB) device.
